Europäisches Patentamt

European Patent Office

Office européen des brevets

(19)

(11) **EP 0 626 609 B1**

(12) **EUROPÄISCHE PATENTSCHRIFT**

(45) Veröffentlichungstag und Bekanntmachung des Hinweises auf die Patenterteilung:
**08.07.1998 Patentblatt 1998/28**

(51) Int Cl.6: **G02F 1/133**, G02F 1/137, G09G 3/36

(21) Anmeldenummer: **94107036.9**

(22) Anmeldetag: **05.05.1994**

(54) **Verfahren und Vorrichtung zur Ansteuerung von Flüssigkristallanzeigezellen**

Method and device for driving a liquid crystal display cell

Procédé et dispositif de commande de cellule d'affichage

(84) Benannte Vertragsstaaten:
**CH DE FR GB IT LI NL**

(30) Priorität: **19.05.1993 CH 1527/93**

(43) Veröffentlichungstag der Anmeldung:
**30.11.1994 Patentblatt 1994/48**

(73) Patentinhaber: **Rolic AG**
**6301 Zug (CH)**

(72) Erfinder:
• **Fünfschilling, Jürg**
**CH-4054 Basel (CH)**
• **Schadt, Martin**
**CH-4411 Seltisberg (CH)**

(74) Vertreter: **Eder, Carl E. et al**
**Patentanwaltsbüro EDER AG**
**Lindenhofstrasse 40**
**4052 Basel (CH)**

(56) Entgegenhaltungen:
• **JOURNAL OF APPLIED PHYSICS, 15 Oct. 1989, USA, Bd.66, Nr.8, ISSN0021-8979, Seiten 3877-3882, XP000073911; J. FÜNFSCHILLING et al.: 'Fast responding and highly multiplexible distorted helix ferroelectric liquid-crystal displays'**
• **JAPANESE JOURNAL OF APPLIED PHYSICS, PART 1 (REGULAR PAPERS & SHORT NOTES), Sept. 1994, JP, Bd.33, Nr.9A, ISSN0021-4922, Seiten 4950-4959; J. FÜNFSCHILLING et al.: 'Physics and electronic model of deformed helix ferroelectric liquid crystal displays'**

EP 0 626 609 B1

**Beschreibung**

Die Erfindung betrifft ein Ansteuerungsverfahren für Flüssigkristallzellen des sog. DHF (distorted helix ferroelectric)-Typs, und eine dafür geeignete Schaltung.

Für DHF-Zellen war es bekannt, zur Verringerung der Schaltzeiten mit speziellen Pulsformen anzusteuern (vgl. EP-A-356 730). Dies führt dann zu Schaltzeiten im Bereich von ca. 40 µs.

Dieser Betriebsmodus erlaubt sowohl die für DHF-Zellen typischen Grauwerte, als auch, in Kombination mit aktiver Matrix, Multiplexieren. Für den technischen Einsatz von Flüssigkristallzellen, z.B. in schaltbaren Filtern, Lichtventilen (sog. Spatial Light Modulators, SLMs) oder Stereobrillen, ist die relativ kurze Schaltzeit der DHF-Zelle von Vorteil. Deshalb besteht bei Flüssigkristallzellen grundsätzlich immer das Bedürfnis nach noch kürzeren Schaltzeiten.

Es wurde nun überraschend gefunden, dass durch eine neuartige Ansteuerungsschaltung die Schaltzeiten um einen Faktor 10 verringert werden.

Erfindungsgemäss wird demnach das Ziel der hohen Schaltgeschwindigkeit bei gleichzeitiger Verfügbarkeit von Grauwerten dadurch erreicht, dass die Zelle über eine mit ihr in Serie geschaltete Kapazität angesteuert wird.

Eine dafür geeignete Schaltung zeichnet sich dadurch aus, dass die Zelle im Betrieb mit einer gegenüber der Kapazität der Helix kleinen Kapazität in Serie geschaltet ist.

Gemäss einer besonders bevorzugten Ausführungsform der Erfindung wird die zusätzliche Kapazität mittels einer durchsichtigen Isolationsschicht zwischen den Ansteuerelektroden und dem Flüssigkristall gebildet.

Die so erreichbaren Zeiten sind kürzer als die von vergleichbaren DHF-Zellen, die direkt mit Rechteckpulsen angesteuert werden. Die Ansteuerspannung ist vorzugsweise höher als bisher übliche Ansteuerspannungen. Sie kann bei dieser Betriebsart auch höher sein, ohne dass die Helixstruktur des Flüssigkristalls dabei zerstört, d.h. aufgewunden wird.

Wie bei der Ansteuerung mit einer speziellen Pulsform und im Gegensatz zur Lagerwall-Zelle sind mit der erfindungsgemässen Ansteuerung immer noch Graustufen möglich: Durch geeignete Wahl der Amplitude und/oder der Pulszeit kann also jede gewünschte Deformation (= Transmissionsänderung der Zelle erreicht werden.

Elektrochemisch induzierte Degradation des Flüssigkristalles wird vermieden, indem die Zelle infolge der Isolationsschicht keinen Gleichstrom führt.

Anwendung kann eine solche Zelle finden in Anzeige zellen, einschliesslich Fernsehgeräte und sog. Terminals, in Druckern (Ersatz für Laserdrucker) und generell überall, wo rasche Lichtmodulatoren, oder Modulatoren mit Graustufen verwendet werden können.

Im folgenden wird anhand der beiliegenden Zeichnungen ein bevorzugtes Ausführungsbeispiel der Erfindung beschrieben.

Es zeigen

Fig. 1     eine schematische Darstellung einer DHF-Zelle im Schnitt.

Fig. 2     ein Ersatzschaltbild der erfindungsgemässen Zelle.

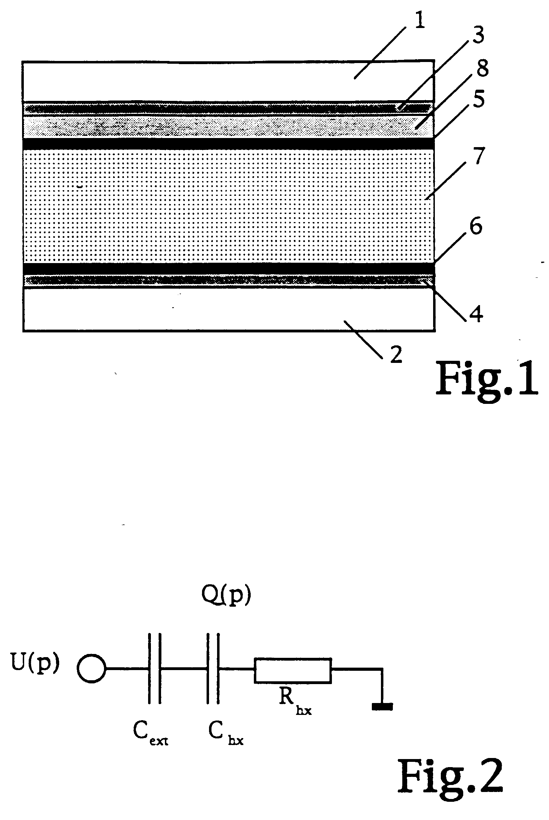

Die in Fig. 1 schematisch im Schnitt gezeigte Flüssigkristallzelle ist eine sog. DHF (distorted helix ferroelectric)-Zelle wie sie in der Schweizer Patentanmeldung Nr. 1555/88 vom 26. April 1988 beschrieben ist. Sie weist zwei parallel und im Abstand von ca. 2 µm voneinander angeordnete Substrate, z.B. Glasplatten 1, 2 auf, die auf den einander zugewandten Flächen mit Elektrodenschichten 3, 4 versehen sind. Die Platten 1, 2 weisen ferner auf den einander zugewandten Flächen PVA-Beschichtungen 5, 6 auf, die in einer Vorzugsrichtung behandelt, z.B. gerieben sind, und so in bekannter Weise der Orientierung der Flüssigkristallmoleküle dienen. Zwischen den Platten ist eine Flüssigkristallschicht 7 angeordnet.

Der Flüssigkristall ist beim vorliegenden Ausführungsbeispiel eine Mischung aus

| | |
|---|---|
| 13,1 Gew.% | 5-Nonyl-2-[p-(nonyloxy)phenyl]pyrimidine, |
| 21,9 Gew.% | 2-[p-(Hexyloxy)phenyl]-5-nonylpyrimidine, |
| 4,4 Gew.% | 2-[p[(E)-2-Octenyloxy]phenyl]-5-octylpyridine, |
| 8,8 Gew.% | 2-(p-Heptylphenyl)-5-[(E)-2-octenyloxy]pyrimidine, |
| 8,8 Gew.% | 5-[(E)-2-Decenyloxy]-2-(p-heptylphenyl)pyrimidine, |
| 4,4 Gew.% | (E)-5-Heptyl-2-(4-oct-2-enyloxy-phenyl)-pyridine, |
| 9,3 Gew.% | 2,2'-(4,4'-Biphenylene)bis[(2S,4S,5S)-4-methyl-5-octyl-m-dioxane] und |
| 29,3 Gew.% | Bis[(R)-1-methylheptyl]-p-terphenyl-4,4''-dicarboxylate. |

Zwischen der Elektrodenschicht 3 und der Orientierungsschicht 5 auf einer der beiden Glasplatten ist eine Isolationsschicht 8 angeordnet, die das Dielektrikum einer Kapazität darstellt, die in Serie zur Kapazität der Flüssigkristallschicht liegt. Anstelle der in die Flüssigkristallzelle integrierten Kapazität kann aber auch über einen kommerziell erhältlichen Kondensator angesteuert werden, der mit der Zelle in Serie geschaltet ist.

In dem in Fig. 2 gezeigten Ersatzschaltbild der erfindungsgemässen Zelle bezeichnet der Index hx die Parameter der Flüssigkristallschicht. Der elektrooptische Effekt der DHF-Zelle kommt durch eine Deformation einer ferroelektrischen Helix zustande. Diese Deformation ist gekoppelt an eine Aufladung (Polarisationsladung) der Helix. Die Ladung $Q_{hx}$ ist also ein Mass für die Verformung der Helix und damit auch für den elektrooptischen Effekt. Die Tatsache, dass eine angelegte Spannung die Helix deformiert, kann beschrieben werden, indem man eine Kapazität $C_{hx}$ einführt, die sich beim Anlegen einer Spannung auflädt. Die Viskosität des Flüssigkristalles wird dabei durch einen Seriewiderstand $R_{hx}$ beschrieben. In $R_{hx}$ ist auch der Seriewiderstand der ITO-Schicht enthalten.

Der elektrooptische Effekt $f_{eo}(Q_{hx})$ ist dabei nur eine Funktion von $Q_{hx}$. Dieses Modell führt auf eine Frequenzabhängigkeit für $Q_{hx}$ der folgenden Form:

$$Q_{hx}(p) = C_{hx} \frac{U(p)}{pR_{hx}C_{hx} + 1} \tag{1}$$

wobei $p=j\omega$, $\omega$=Frequenz, $j$=imaginäre Einheit.

Das Frequenzverhalten von $f_{eo}$ entspricht also dem eines RC-Gliedes mit einer charakteristischen Zeit $\tau_{hx}=R_{hx}C_{hx}$. Der elektrooptische Effekt folgt bis zu der Grenzfrequenz des RC-Gliedes der angelegten Spannung, so dass eine Separation in Schalt- und Haltespannung entfällt.

Wird nun eine zusätzliche Kapazität Cext in Serie zur Zelle geschaltet, so muss $C_{hx}$ in der Formel (1) durch C, die Kapazität der Serieschaltung von $C_{hx}$ und $C_{ext}$ ersetzt werden:

$$C = C_{hx} C_{ext}/(C_{hx} + C_{ext}) \tag{2}$$

Die neue charakteristische Zeit ist also $\tau = R_{hx} C$. Da C immer kleiner ist als $C_{ext}$, kann diese Zeit sehr kurz gemacht werden für kleine Werte von $C_{ext}$. Da die Grösse des elektrooptischen Effektes auch proportional C ist (Gl. 1), ist die untere Zeit schliesslich durch die höchste Spannung limitiert, die man anlegen kann, ohne die Zelle zu beschädigen.

An kapazitiv gekoppelte Flüssigkristallzellen kann man keine Gleichspannungskomponente anlegen. Einerseits ist das sehr erwünscht, da dann keine Raumladungen in der Flüssigkristallzelle getrennt werden, was auf die Orientierung, die Stabilität oder den Arbeitspunkt (Geisterbilder) einen schlechten Einfluss hätte. Je nach Wahl der Stellung der gekreuzten Polarisatoren bezüglich der Helix kann man zwei Betriebsarten einer DHF-Zelle unterscheiden. In beiden Arten ist eine gleichspannungsfreie Ansteuerung mit Einschränkungen möglich:

Ist ein Polarisator parallel zur Helixachse, so ist die Lichttransmission minimal wenn die Spannung 0V an der Flüssigkristallzelle anliegt und wird grösser sowohl für positive wie auch für negative Spannungen. Steuert man also die Flüssigkristallzelle abwechselnd positiv und negativ an, so liegt im Mittel die Spannung Null an der Flüssigkristallzelle. Bei Fernsehbildern könnte man also abwechslungsweise ein positives und ein negatives Bild schreiben. Ein Nachteil dieser Methode ist die Halbierung des nutzbaren elektrooptischen Effektes.

Ist ein Polarisator um einen festen Winkel (bevorzugt 22,5°) zur Helixachse gedreht, so ist die Lichttransmission minimal z.B. für eine gewisse negative Spannung $U_-$ und maximal für eine positive Spannung $U_+$. Um eine gleichspannungsfreie Ansteuerung zu gewährleisten, muss also $U_+ t_+ = U_- t_-$ gelten, wenn $t_{+,-}$ die Zeiten bedeuten, während der die positive resp. negative Spannung anliegt. Diese Betriebsart ist also besonders geeignet für Anwendungen mit konstantem Tastverhältnis wie z.B. seriell geschaltene Filter oder eine Brille zum Beobachten von Stereobildern auf einem Bildschirm, wo abwechslungsweise das linke und das rechte Bild dargestellt werden.

Wie teilweise schon erwähnt, liegen die Vorteile der erfindungsgemässen Ansteuermethode vor allem in kurzen Schaltzeiten, im Fehlen eines Gleichspannungsanteils über der Zelle, in einer wesentlich vereinfachten Ansteuerung und im inhärenten Isolationsschutz gegen Kurzschlüsse. Diese Vorteile bestehen zusätzlich zu den von DHF-Zellen bekannten Vorteilen der Möglichkeit von Graustufen, von dünnen Zellen mit geringer Blickwinkelabhängigkeit und der Kombination mit aktiver Adressierung.

## Patentansprüche

1. Verfahren zur Ansteuerung einer Flüssigkristallzelle des DHF (distorted helix ferroelectric)-Typs, dadurch gekennzeichnet, dass kapazitiv über eine im Vergleich zur Kapazität der Flüssigkristallschicht kleine Kapazität (8, $C_{ext}$)

EP 0 626 609 B1

angesteuert wird.

**2.** Vorrichtung mit einer Flüssigkristallzelle des DHF-Typs und einer Schaltung zur Ansteuerung dieser Flüssigkristallzelle, dadurch gekennzeichnet, dass die Zelle im Betrieb mit einer gegenüber der Kapazität der Flüssigkristallschicht kleinen Kapazität ($8, C_{ext}$) in Serie geschaltet ist.

## Claims

**1.** A method of driving a liquid crystal cell of the DHF (distorted helix ferroelectric) type, characterized in that driving is capacitive via a capacitance ($8, C_{ext}$) which is small compared with the capacitance of the liquid crystal layer.

**2.** A device with a liquid crystal cell of the DHF (distorted helix ferroelectric) type and a circuit for driving said liquid crystal cell, characterized in that during operation the cell is connected in series with a capacitance ($8, C_{ext}$) which is small compared with the capacitance of the liquid crystal layer.

## Revendications

**1.** Procédé pour commander une cellule à cristaux liquides du genre DHF ("Distorded Helix Ferroelectric", ferroélectrique à hélice distordue), caractérisé en ce que, elle est commandée par l'intermédiaire d'un condensateur ($8, C_{ext}$) de faible capacité en comparaison de la capacité de la cellule à cristaux liquides.

**2.** Dispositif muni d'une cellule à cristaux liquides du genre DHF et montage pour la commande de cette cellule à cristaux liquides caractérisés en ce que la cellule en service est reliée en série avec un condensateur ($8, C_{ext}$) de faible capacité en comparaison de la capacité de la couche de cristaux liquides.

4

# Fig.1

$U(p)$   $Q(p)$

$C_{ext}$   $C_{hx}$   $R_{hx}$

# Fig.2